Europäisches Patentamt

European Patent Office

Office européen des brevets

(11) Veröffentlichungsnummer: **0 234 543**
**B1**

(12) **EUROPÄISCHE PATENTSCHRIFT**

(45) Veröffentlichungstag der Patentschrift: 22.08.90

(51) Int. Cl.⁵: **B 61 B 13/08, B 60 L 13/04**

(21) Anmeldenummer: **87102547.4**

(22) Anmeldetag: **23.02.87**

(54) **Magnetkraftsystem für reibungsarmen Transport von Lasten.**

(30) Priorität: **27.02.86 DE 3606459**
**16.10.86 DE 3635258**

(43) Veröffentlichungstag der Anmeldung:
**02.09.87 Patentblatt 87/36**

(45) Bekanntmachung des Hinweises auf die
Patenterteilung:
**22.08.90 Patentblatt 90/34**

(84) Benannte Vertragsstaaten:
**AT BE CH DE ES FR GB GR IT LI LU NL SE**

(56) Entgegenhaltungen:
**DE-A-2 426 053**
**DE-A-3 347 635**
**FR-A-2 163 547**
**FR-A-2 228 650**
**US-A-2 812 203**
**US-A-3 780 668**
**US-A-4 324 185**

(73) Patentinhaber: **Schuster, Peter**
**Prinzregentenstrasse 41**
**D-8201 Raubling (DE)**

(72) Erfinder: **Schuster, Peter**
**Prinzregentenstrasse 41**
**D-8201 Raubling (DE)**

(74) Vertreter: **Petra, Elke, Dipl.-Ing. et al**
**Tattenbachstrasse 9**
**D-8000 München 22 (DE)**

Courier Press, Leamington Spa, England.

EP 0 234 543 B1

## Beschreibung

Die Erfindung bezieht sich auf ein Magnetsystem für reibungsarmen Transport von Lasten, nach dem Oberbegriff des Anspruches 1.

Die bekannten Magnetkraftsysteme, auch Gleitsysteme genannt, bewegen sich praktisch reibungslos über Trägerschienen, in einem bestimmten Abstand von diesen, fort. Diese Systeme sind insgesamt sehr aufwendig und kompliziert, so daß ihre Wirtschaftlichkeit in Frage gestellt wird.

So z. B. wird in dem VDI-Nachrichten Nr. 1 vom 03.01.86, die Magnetbahn "Transrapid 06" aus Emden beschrieben. Es wird ersichtlich, daß ein großer technischer Aufwand notwendig ist, um das Fahrzeug einen Zentimeter hoch zu heben. Leider ist der notwendige Energieverbrauch nicht angegeben, um das 120 t schwere Fahrzeug in der Schwebe zu halten. Bei 196 Personen Traglast entspricht dieses jedoch einem Gewicht von ca. 120 000 kg, also 612 kg pro Person (je Person ca. 80 kg angesetzt). Dazu kommt noch die teuere Anwendungstechnik und die noch ungelösten Probleme bei Schnee und Eis.

Größere Schwierigkeiten gibt es noch bei den bekannten japanischen Schwebebahnen. Einige müssen auf Rädern rollen, bis sie eine Geschwindigkeit von 200 km/h erreichen, wo dann das Schweben beginnt.

Ähnlich funktioniert die in der DE-A-24 26 053 beschriebene sog. "Berliner Magnetbahn", deren Unterschied jedoch darin besteht, daß die Führungsrollen über dem Magnetfeld geführt werden.

Des weiteren ist aus der französischen Anmeldung 22 28 650 (Merlin Gerin) ein Magnettransportsystem bekannt, in welchem Magnete, insbesondere Dauermagnete, ferromagnetischen Profilen zugeordnet sind. Dabei sind Magnete in einer ersten Ausführung zwischen zwei im wesentlichen horizontalen Profilwänden angeordnet, wobei sie in Transportrichtung gesehen, jeweils eine alternative Polausrichtung aufweisen und zwischen ihnen jeweils ein Luftspalt vorgesehen ist. Hierdurch wird ein im wesentlichen horizontaler Kraflinienfluß zwischen jeweils zwei aufeinanderfolgenden Magneten erzeugt. In einem zweiten Ausführungsbeispiel sind in einer einzigen Trägerprofilwand zu beiden Seiten sich gegenüberstehende Magnetpaare mit alternativer Polausrichtung angeordnet, wodurch eine einfache, horizontale, durch die Profilwand senkrecht hindurchgehende Magnetlinienführung stattfindet. Insgesamt wird eine relativ geringe Tragfähigkeit erreicht. Die Traglast ist auch hier ein Vielfaches der Nutzlast.

Aus der DE-A-33 47 635 ist ein Magnetkraftsystem bekannt, sowohl an den beiden Seiten einer vertikalen Trägerprofilwand, als auch an der Innenseite der Schenkel eines ferromagnetischen, nach oben offenen U-Profils, welches die T-Profilwand umgreift, in Transportrichtung sich ausdehende Magnetstreifen vertikal übereinander so angeordnet sind, daß sie vertikal gesehen alternierende Polausrichtungen aufweisen. Gleichzeitig sind die Polaritäten der sich jeweils am Trägerprofil und U-Profil gegenüberliegenden Polflächen ungleichnamig (Anziehungsprinzip). Zwar wird hier durch vertikale Kraftlinienführung die Entstehung von Wirbelströmen während der Transportbewegung vermieden, jedoch wird auch hier eine nur verhältnismäßg geringe Tragkraft erzielt. Zudem ist die benutzte Konstruktion sehr aufwendig, da viele Magnete angeordnet werden müssen, um eine bestimmte Last anheben zu können.

Auch zeigt die DE-A-21 46 143 ein elektromagnetisches Trag- und Führungssystem mit mindestens einem Elektromagneten mit im wesentlichen U-förmigen Kernprofil, an welchem die Last befestigt ist und einem an einem ortsfesten Träger angebrachten, weichmagnetischen Träger-U-Profil, dessen Schenkel-Profilwände vertikal orientiert sind. Der Kraftlinienschluß erfolgt im wesentlichen vertikal über die beiden sich im wesentlichen vertikal gegenüberstehenden U-Profile. Das System ist durch Verwendung von Elektromagneten relativ aufwendig. Auch werden Führungssysteme mit geregelten Elektromagneten als Seitenführung verwendet, was den Aufbau des Systems relativ komplex werden läßt.

Schließlich ist aus der US-A-4, 424, 185 (Vinson) ein Transportsystem bekannt, das demersten Teil des Anspruchs 1 entspricht, und bei welchem mit alternierenden Polen in Fahrtrichtung hintereinander angeordnete Permanentmagnete vorgesehen, an denen die Last hängt. Zu beiden Polseiten der Permanentmagnete sind zwei aus ferromagnetischen Blechpaketen gebildete Schienen vorgesehen, welche im wesentlichen vertikale, zueinander und zu den Magnetpolen parallele Wände bilden. Die Magnete sind in Fahrtrichtung mit Luftspalt zueinander und mit alternierender Polausrichtung angeordnet, so daß ein im wesentlichen horizontaler Magnetlinienfluß jeweils zwischen zwei aufeinanderfolgenden Magneten vorhanden ist. Die Relativkonstanthaltung der Luftspalte zwischen Trägerprofilen und Magneten wird durch entsprechende Führungsrollen realisiert. In den zur Vermeidung von Wirbelströmen, beblechten Trägerprofilen sind entlang der gesamten Fahrstrecke elektromagnetische Spulen eingelagert, welche durch entsprechende Steuerung von außen zusammen mit den an der Last befestigten in Fahrtrichtung wechselpolig angeordneten Dauermagnten gleichzeitig für Vortrieb und zum Teil auch mit für die Schwebung sorgen. Durch die blechlamellenartige Ausbildung der Trägerprofile und die in diesen eingearbeiteten Spulen wird der Wirkungsgrad der Anordnung relativ stark herabgesetzt. Die Bauweise, insbesondere der Trägerprofile, ist sehr komplex und kostenaufwendig, insbesondere da die gesamte Länge der Fahrstrecke aus den Blechpaketen mit Spulen dazwischen gefertigt sein muß.

Aufgabe der Erfindung ist es, ein Magnetkraftsystem vorhergehend beschriebener Gattung anzugeben, welches einfach und leicht im Aufbau ist, eine sichere Funktion bei geringem Energieverbrauch, einen hohen Wirkungsgrad und eine auf ein Mindestmaß erfolgende Reduktion von Wirbelströmen im Trägersystem sicherstellt.

Diese Aufgabe wird erfindungsgemäß durch ein Magnetkraftsystem mit den Merkmalen des Anspruches 1 gelöst.

Demgemäß ist das Trägerprofil ein nach unten offenes U-Profil aus ferromagntischem Material, dessen Schenkel zueinander parallele vertikale Profilwände bilden, wobei der mindestens eine Magnet zwischen den Profilwänden, also innerhalb des Profils, angeordnet ist.

Dabei reicht die Anordnung mindestens eines inneren Magneten. Die Magnetlinien werden über das oben geschlossene U-profil geleitet, wodurch eine vertikale Kraftlinienführung erreicht wird. Dies bringt den Vorteil, daß Wirbelströme im Trägersystem nur noch in sehr reduziertem, praktisch vernachlässigbarem Maße auftauchen. Dies ist zudem eine konstruktiv sehr einfache Lösung, die zugleich sehr wirtschaftlich ist. Natürlich erhöht sich der Wirkungsgrad, wenn mehrere Magnete mit gleicher Polausrichung in Transportrichtung bzw. Fahrtrichtung hintereinander angeordnet sind.

Gemäß einer Weiterbildung des Erfindungsgedankens kann die Tragkraft des Systems noch wesentlich erhöht werden, wenn an der jeweiligen Außenseite der beiden Profilwände jeweils mindestens ein äußerer Magnet/Magnetpaar angeordnet ist, wobei jeweils gleichpolige Magnetflächen der in bezug auf die Vertikalwände gegenüberstehenden inneren und äußeren Magnete einander zugekehrt sind. Zudem ist von Vorteil, wenn die äußeren Magnetpole der beiden äußeren Magnete über ein nach oben offenes U-Profil kurzgeschlossen sind. Die äußeren Magnete sind demzufolge an den Schenkel-Innenseiten des Kurzschluß-U-Profils befestigt. Gleichzeitig ist der mindestens eine innere Magnet zu dem Kurzschluß-U-Profil über eine Isolierplatte abgeschirmt und gleichzeitig an dieser befestigt. Hierdurch werden die Magnetkraftlinien in vertikaler Ebene verlaufen. Dies bringt den vorerwähnten Vorteil, daß Wirbelströme im Trägersystem dann nur noch in sehr reduziertem Maße auftreten können.

Durch die Anordnung mehrerer Profile nebeneinander bzw. die Anordnung von mehreren Profilen nebeneinader, die mehrere zueinander parallele Profilwände mit entsprechend zugeordneten Magneten aufweisen, kann eine weitere erhebliche Erhöhung der Traglast erzielt werden.

Das erfindungsgemäße Magnetkraftsystem erlaubt einen Einsatz in unterschiedlichen konstruktiven Lösungen. So kann die durch das System zu befördernde Last oberhalb der Profil/Magnet-Anordnung vorgesehen sein. Dadurch wird eine sogenannte stehende Anordnung erzielt.

Der Antrieb des Fahrzeugs kann dabei auf verschiedene Art erfolgen, z. B. mit Antriebsrollen, welche die Trägerschienen berühren, oder mit Hilfe eines Linearmotors.

Die von dem System zu befördernde Last kann jedoch auch unterhalb der Profil/Magnet-Anordnung vorgesehen sein. Hierzu wird die sogenannte hängende Anordnung erzielt. Diese hängende Anordnung kann als vorteilhaftere Variante angesehen werden, da hier die ferromagnetischen Trägerprofile, als auch die Antriebselemente unterhalb eines Trägersystems, beispielsweise eines Betonträgers, vorgesehen sind. Dadurch wird eine Witterungsanfälligkeit, insbesondere im Winter, vermieden.

Die Erfindung wird nachfolgend anhand von Ausführungsbeispielen unter bezug auf die Zeichnung näher erläutert.

Es zeigt:

Fig. 1 eine Grundausführungsform mit U-förmigem Trägerprofil und zwischen den Vertikalwänden/Schenkeln des Profils angeordneten Magneten, unbelastet

Fig. 2 die gleiche Anordnung wie in Fig. 1, jedoch mit unter Last aus dem Profil senkrecht herabgezogenen Magneten,

Fig. 3 eine zweite Ausführungsform, mit U-Trägerprofil und inneren, zwischen den Profil-Schenkeln/Trägerwand und äußeren, also außerhalb der Profil-Schenkel angeordneten Magneten und mit einem nach oben offenen Kurzschluß-U-Profil für die äußeren Magnete,

Fig. 4 einen horizontalen Schnitt nach den Linien IV-IV aus Fig. 1, die Anordnung von Führungsrollen an den Magneten im Verhältnis zu den Profil-Schenkeln darstellend,

Fig. 5 bis 8 Anordnungsmöglichkeiten des Systems in bezug auf Betonträger und Last, davon:

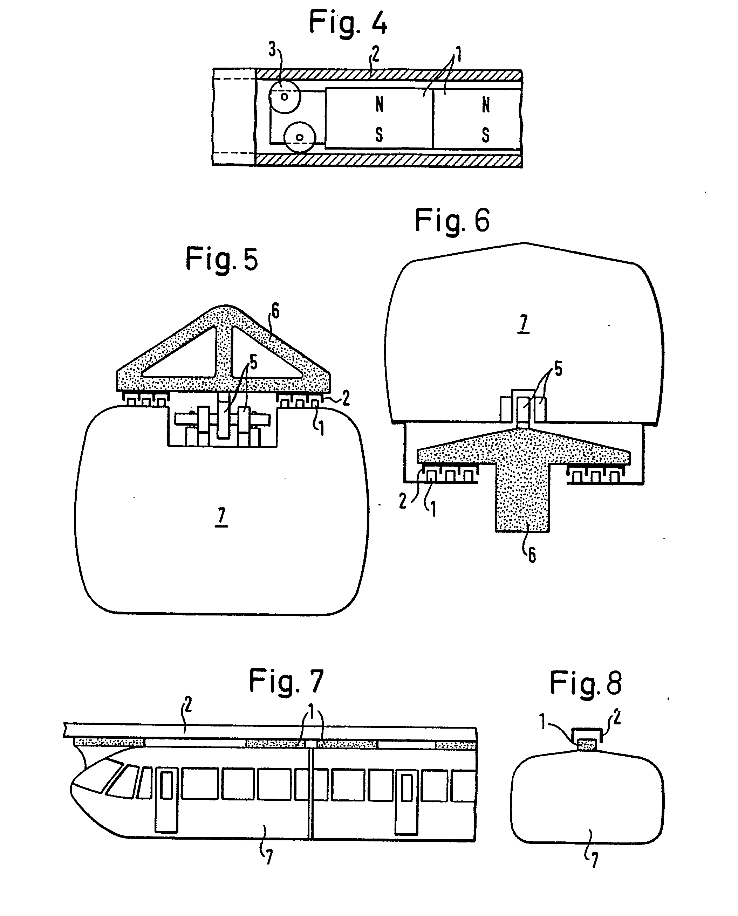

Fig. 5 eine erste Anordnungsweise mit der zu befördernden Last unterhalb der Profil/Magnet-Anordnung (hängende Anordnung),

Fig. 6 eine Anordnungsweise mit der zu befördernden Last oberhalb der Profil/Magnet-Anordnung (stehende Anordnung),

Fig. 7 eine Seitenansicht des Systems mit hängender Last, wobei die Last ein Personen-Beförderungsfahrzeug ist, und

Fig. 8 eine Frontansicht der Anordnung nach Fig. 7.

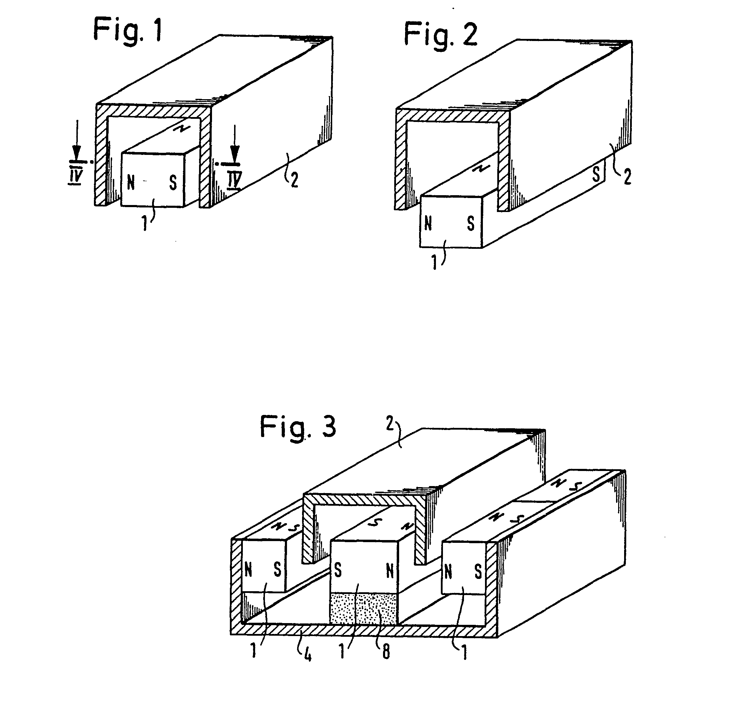

In dem in Fig. 1 und 2 dargestellten Ausführungsbeispiel ist als Trägerprofil 2 eine U-förmige Schiene aus ferromagnetischem Material vorgesehen. Zwischen den beiden vertikalen Schenkeln des nach unten offenen Profils 2 ist ein Magnet 1 so angeordnet, daß die beiden Polflächen jeweils nahe beabstandet zu den Seitenwänden und im wesentlichen parallel mit diesen angeordnet sind. Dadurch vermögen die Magnetkraftlinien, von dem einen Pol ausgehend, über die nahe Vertikal-Trägerprofilwand, die Trägerprofilbasis und die zweite Vertikal-Profilwand, in den zweiten Pol des Magneten 1 zu verlaufen. Die magnetischen Kraftlinien erhalten dadurch einen optimalen vertikalen Verlauf.

Fig. 2 zeigt die Situation unter sehr großer Last bei einer Anordnung nach Fig. 1. Je weiter der Magnet (1) nach unten durch ein daran befestigtes Gewicht herausgezogen wird, um so größer wird die dagegen wirkende Kraft (Schwebekraft). Bei Belastung werden die Magnete so weit aus dem Profil herausgezogen, bis sich die Anziehungskraft mit der Last ausgleicht. Für die senkrechte Lage der Magnete ist folglich keine Regelung notwendig.

Das in Fig. 3 dargestellte Ausführungsbeispiel zeigt eine kraftverstärkte Ausführungsform, bei welcher das Trägerprofil 2 ebenfalls ein nach unten offenes U-Profil ist. In bezug auf seine beiden vertikalen Profilwände bzw. Schenkel sind sowohl zwischen diesen als auch außerhalb dieser, sich mit in Profilflächen im wesentlichen gegenüberliegende innere bzw. äußere Magnete (1) angeordnet. Es sind jeweils in bezug auf die Profilwände gegenüberliegende Polflächen gleichsinnig gerichtet (N-N; S-S). Dabei sind die äußeren Magnete (1) über ein nach oben offenes U-Profil (2) kurzgeschlossen. Die inneren Magnete (1) sind zu dem Kurzschlußprofil (4) über z. B. eine Isolierplatte (8) beabstandet. Durch die gleichsinnige Anodnung sich gegenüberliegender Magnete nehmen die Kraftlinien, sich abstoßend, einen entsprechenden Verlauf durch die magnetischen Trägerwände (2) bzw. das Kurzschlußprofil (4). Zudem sind praktisch zwei Magnetlinienkreisläufe vorhanden. Der erste läuft vom inneren Magnet 1 über das innere Träger-U-Profil 2, wie im Beispiel nach Fig. 1. Der zweite läuft über das Kurzschlußprofil 4, die äußeren Magnete und dann das innere Träger-Profil 2.

In Fig. 4 ist die Anordnung der Magnete 1 im Verhältnis zu den Seitenwänden der Trägerprofile 2 ersichtlich. Führungsrollen 3 sind dabei so angeordnet, daß die Magnete auch in Krümmungen genau in der Mitte zwischen den Wänden gehalten werden.

Abbildung 5 zeigt eine Anwendungsmöglichkeit des Systems 1, 2 in hängender Anordnung. An einem Betonträger 6 sind an der Unterseite die Trägerprofile 2 befestigt, während an der Oberseite einer darunter angeordneten Last 7, die beispielsweise ein Transportfahrzeug sein kann, die Magnete 1 in Zusammenwirkung mit den Profilen 2 vorgesehen sind. An der Last bzw. am Fahrzeug 7 sind an der Oberseite desweiteren die Führungsrollen 3 vorgesehen, die mit einer mittigen Trägerschiene zusammenarbeiten. Die Fortbewegung wird mit einem ebenfalls mittig angeordneten Linearmotor 5 bewerkstelligt.

Fig. 6 zeigt eine sog. stehende Anordnung der Last 7 in bezug auf das System 1, 2. Die Profilträger 2 befinden sich auch hier an der Unterseite der Betonträger, bzw. von Seitenarmen der Betonträger 6. Die Last bzw. das Fahrzeug 7 ist oberhalb des Trägers 6 angeordnet und untergreift die Seitenarme des Betonträgers 6, die Magnete 1 so tragend, daß sie mit den Trägern 2 entsprechend zusammenwirken. Der Betonträger 6 hält Oberseite mittig eine Führungsschiene für die hier nicht dargestellten Führungsrollen und den Linearmotor 5 für die Fortbewegung.

In Fig. 7 und 8 ist ein praktisches Ausführungsbeispiel dargestellt. Die Last bzw. das Fahrzeug 7 ist hier ein personenbeförderndes Fahrzeug. An dessen Oberseite sind die Magnete 1 befestigt, welche in einen nach unten offenen U-Träger hineinreichen. Es wird ersichtlich, daß das Fahrzeug 7 in hängender Anordnung befördert wird.

Bezugszeichenliste
1. Magnete
2. Trägerprofile
3. Führungsrollen
4. Kurzschlußprofil
5. Linearmotor
6. Betonträger
7. Last bzw. Fahrzeug
8. Isolierplatte

**Patentansprüche**

1. Magnetkraftsystem für den reibungsarmen Transport von Lasten, mit
mindestens einem an einem ortsfesten Träger befestigten weichmagnetischen Trägerprofil (2) mit mindestens einer vertikal und gleichzeitig zur Transportrichtung paralle orientierten Profilwand,
mindestens einem Permanentmagneten (1), der entlang der Profilwand und im wesentlichen parallel zu dieser und mit quer zur Transportrichtung ausgerichteten Polen angeordnet ist,
je einem im wesentlichen konstanten Luftspalt zwischen Magneten und Trägerprofil, wobei die Lasten an den Magneten befestigt sind, und
mechanischen Mitteln (1) zur konstanten Aufrechterhaltung der Luftspalte, dadurch gekennzeichnet, daß das Trägerprofil (2) ein nach unten offenes U-Profil (2) ist, dessen zwei Schenkel zueinander parallele vertikale Profilwände bilden,
und daß der mindestens eine Magnet (1) zwischen den zwei Profilwänden (2) angeordnet ist.

2. Magnetkraftsystem nach Anspruch 1 dadurch gekennzeichnet, daß zwischen den beiden Profilwänden (2) ein Magnet (1) angeordnet ist.

3. Magnetkraftsystem nach Anspruch 1, dadurch gekennzeichnet, daß zwischen den beiden Profilwänden mindestens zwei in Längs- bzw. Transportrichtung hintereinander angeordnete Magnete vorgesehen sind.

4. Magnetkraftsystem nach Anspruch 3, dadurch gekennzeichnet, daß die Magnete in Transportrichtung gesehen, jeweils eine gleichpolige Ausrichtung aufweisen und daß kein Luftspalt zwischen den aufeinanderfolgenden Magneten (1) vorgesehen ist.

5. Magnetkraftsystem nach Anspruch 1, dadurch gekennzeichnet, daß im Inneren des U-Profils (2), zwischen den beiden vertikalen Profilwänden, mindestens ein Magnet (1) angeordnet ist und daß an der jeweiligen Außenseite der Profilwände jeweils mindestens ein Magnet (1) vorgesehen ist, wobei jeweils gleichpolige Magnetflächen in bezug auf die Vertikalwände einander zugekehrt sind.

6. Magnetkraftsystem nach Anspruch 5, dadurch gekennzeichnet, daß die äußeren Magnete (1) über ein nach oben offenes U-Profil (4) kurzgeschlossen sind und der innere Magnet (1) zu diesem U-Profil (4) über eine Isolierplatte (8) abgeschirmt ist.

7. Magnetkraftsystem nach den vorhergehenden Ansprüchen, dadurch gekennzeichnet, daß zur Erhöhung der Traglast mehrere U-Profile (2) mit entsprechend zugeordneten Magneten (1) nebeneinander angeordnet sind.

8. Magnetkraftsystem nach Anspruch 1, dadurch gekennzeichnet, daß die von dem System (1, 2) zu befördernde Last (7) oberhalb der Profil/Magnet-Anordnung vorgesehen ist (stehende Anordnung).

9. Magnetkraftsystem nach Anspruch 1, dadurch gekennzeichnet, daß die von dem System (1, 2) zu befördernde Last (7) unterhalb der Profil/Magnet-Anordnung vorgesehen ist (hängende Anordnung).

10. Magnetkraftsystem nach Anspruch 1, dadurch gekennzeichnet, daß zum Transport in dem System (1, 2) ein Linearmotor (5) vorgesehen ist.

11. Magnetkraftsystem nach Anspruch 1, dadurch gekennzeichnet, daß zum Transport in dem System (1, 2) mit dem Profil zusammenwirkende, von mindestens einem Motor betätigte Antriebsrollen vorgesehen sind.

**Revendications**

1. Système à force magnétique pour le transport de charges à faible frottement, comprenant

au moins un profilé porteur (2) doux fixé à un porteur stationnaire, présentant au moins une paroi de profilé orientée verticalement et également parallèle au sens de transport,

au moins un aimant permanent (1) disposé le long de ladite paroi de profilé et essentiellement en parallèle à celle-ci, et présentant des pôles orientés au travers au sens de transport,

respectivement un entrefer essentiellement constant entre lesdits aimants et le profilé porteur, les charges étant fixées aux aimants, et

des moyens mécaniques (3) pour maintenir lesdits entrefers constant, caractérisé en ce que ledit profilè porteur (2) est un profilé ouvert vers le bas (2) dont les deux branches constituent des parois de profilé verticales et parallèles entre-elles,

et qu'au moins un aimant (1) est disposé entre les deux parois de profilé (2).

2. Système à force magnétique selon la Revendication 1, caractérisé en ce qu'un aimant (1) est disposé entre les deux parois de profilé (2).

3. Système à force magnétique selon la Revendication 1, caractérisé en ce qu'entre les deux parois de profilé sont pourvus au moins deux aimants disposés l'un derrière l'autre en direction longitudinale ou sens de transport.

4. Système à force magnétique selon la Revendication 3, caractérisé en ce que, vue en sens de transport, les aimants présentent une orientation à même polarité, et qu'il n'y a pas un entrefer entre les aimants en succession.

5. Système à force magnétique selon la Revendication 1, caractérisé en ce qu'à l'intérieur du profilé en U (2), entre les deux parois de profilé verticales, est disposé au moins un aimant (1), et en ce qu'à la face extérieure respective desdites parois de profilé est pourvu au moins un aimant (1), tandis que des surfaces magnétiques de même polarité se font face relativement auxdites parois verticales.

6. Système à force magnétique selon la Revendication 5, caractérisé en ce que les aimants externes (1) sont mis en court-circuit par un profilé en U ouvert vers le haut (4), et en ce que l'aimant interne (1) est blindé de ce profilé en U (4) au moyen d'une plaque d'isolement (8).

7. Système à force magnétique selon les Revendications précédentes, caractérisé en ce que pour augmenter la capacité de charge, plusieurs profilés en U (2) aux aimants correspondamment affectés (1) sont disposés côté à côté.

8. Système à force magnétique selon la Revendication 1, caractérisé en ce que la charge (7) à transporter par le système (1, 2) est pourvu au-dessus de l'ensemble profilé/aimant (disposition debout).

9. Système à force magnétique selon la Revendication 1, caractérisé en ce que la charge (7) à transporter par le système (1, 2) est pourvue en-dessous de l'ensemble profilé/aimant (disposition suspendue).

10. Système à force magnétique selon la Revendication 1, caractérisé en ce qu'un moteur linéaire (5) est pourvu pour le transport dans le système (1, 2).

11. Système à force magnétique selon la Revendication 1, caractérisé en ce que des rouleaux d'entraînement actionnés par au moins un moteur, qui coopèrent avec ledit profilé, sont pourvus pour le transport dans le système (1, 2).

**Claims**

1. A magnetic power system for low-friction transportation of loads, comprising

at least one ferromagnetic supporting profile (2) secured to a stationary support, with at least one vertically oriented profile wall which extends in parallel to the direction of transportation,

at least one permanent magnet (1) disposed along said profile wall essentially in parallel to the latter, with poles oriented transversely relative to the direction of transportation,

respectively one essentially constant air gap between the magnets and the supporting profile, while the loads are attached to said magnets, and

mechanical means (3) for permanently maintaining said air gaps, characterized in that said supporting profile (2) is a downwardly open U-section (2) whose two legs constitute vertical profile walls parallel to each other,

and that the at least one magnet (1) is disposed between the two profile walls (2).

2. Magnetic power system according to Claim 1, characterized in that a magnet (1) is disposed between the two profile walls (2).

3. Magnetic power system according to Claim 1, characterized in that at least two magnets are provided between the two profile walls, which are disposed in tandem relationship in the longitudinal or transportation direction.

4. Magnetic power system according to Claim 3, characterized in that the magnets, seen in the direction of transportation, are disposed in equipolar orientation and that no air gap is provided between the successive magnets (1).

5. Magnetic power system according to Claim 1, characterized in that inside said U-section (2) between the two vertical profile walls, at least one magnet (1) is disposed and that at least one magnet (1) respectively is provided at the respective outside of the profile walls, with respectively equipolar magnet surfaces facing each other relative to the vertical walls.

6. Magnetic power system according to Claim 5, characterized in that the outside magnets (1) are short-circuited through an upwardly open U-section (4) and that the inner magnet (1) is shielded from said U-section (4) by an insulating plate (8).

7. Magnetic power system according to the preceding Claims, characterized in that several U-sections (2) with correspondingly associated magnets (1) are disposed in side-by-side relationship so as to increase the load-carrying capacity.

8. Magnetic power system according to Claim 1, characterized in that the load (7) to be conveyed by the system (1, 2) is provided above the profile/magnet arrangement (upright arrangement).

9. Magnetic power system according to Claim 1, characterized in that the load (7) to be conveyed by the system (1, 2) is provided below the profile/magnet arrangement (suspended arrangement).

10. Magnetic power system according to Claim 1, characterized in that a linear motor (5) is provided for movement in the system (1, 2).

11. Magnetic power system according to Claim 1, characterized in that driving rollers are provided for movement in the system (1, 2) which cooperate with said profile and are driven by at least one motor.

# Fig. 1

# Fig. 2

# Fig. 3

Fig. 4

Fig. 5

Fig. 6

Fig. 7

Fig. 8